# EUROPEAN PATENT APPLICATION

(11) **EP 3 858 786 A1**
(43) Date of publication of application: **04.08.2021**
(21) Application number: 19867243.8
(22) Date of filing: 12.09.2019
(51) Int. Cl.: C01B 21/22, B01D 53/22, B01D 71/64

(54) **NITROUS OXIDE PURIFICATION METHOD**

(30) Priority: 28.09.2018 JP 2018184881
(71) Applicant: Showa Denko K.K., Tokyo 105-8518 (JP)
(72) Inventor: KURIHARA Hideyuki, Tokyo 105-8518 (JP)
(74) Representative: Strehl Schübel-Hopf & Partner
(86) International application number: PCT/JP2019/035814
(87) International publication number: WO 2020/066639

(57) **Abstract**

A nitrous oxide purification method includes a step of performing gas separation by introducing a mixed gas containing nitrous oxide into a gas separation membrane including a polymer material to cause nitrous oxide to selectively permeate the gas separation membrane.

## Description

### TECHNICAL FIELD

The present invention relates to a nitrous oxide purification method. More specifically, the present invention relates to a method for purifying nitrous oxide which is effective as, for example, a gas for forming insulating oxide films in semiconductor manufacturing processes.

### BACKGROUND ART

Nitrous oxide (also written as "N₂O" in the present specification) is a colorless gas with a boiling point of -88.5°C. In recent years, nitrous oxide is increasingly used for semiconductors. For example, nitrous oxide is used as a gas for forming insulating oxide films in semiconductor manufacturing processes, and 99.999 vol% or higher purity is required.

Some example methods for producing nitrous oxide are ammonia catalytic oxidation using a manganese oxide-bismuth oxide catalyst, and thermal decomposition of ammonium nitrate as a raw material. Further, recent studies focus on the use of nitrous oxide released in the production process of adipic acid.

When nitrous oxide is produced by ammonia catalytic oxidation or is released in the production of adipic acid, or when any residual N₂O gas or exhausted N₂O gas is recovered in the any production process of nitrous oxide, it is often the case that the N₂O gas obtained is dilute and needs to be concentrated.

Patent Literature 1 describes an N₂O recovery and purification method which includes separating a mixed gas containing at least N₂O through a permeation module, and recovering at least part of N₂O.

Patent Literature 2 describes an N₂O recovery and purification method which includes removing heavy impurities from a gas containing N₂O through adsorption, compressing and liquefying the gas, and removing light impurities and organic compounds from the liquid mixture through evaporation.

### CITATION LIST

### PATENT LITERATURE

Patent Literature 1: JP-A-2000-239007
Patent Literature 2: JP-A-2015-027929

### SUMMARY OF INVENTION

### TECHNICAL PROBLEM

In the method of Patent Literature 1, however, the lowest N₂O concentration in the waste gas before permeation that is described in Examples is as high as 85 vol%. The N₂O concentration in the reaction gas in ammonia catalytic oxidation, or the concentration of N₂O released in the production of adipic acid is generally far below 85 vol% (for example, is about 30 to 50 vol%). Patent Literature 1 does not describe purification from such a low concentration.

The method of Patent Literature 2 performs purification by a series of steps in which a flow of a gas that contains N₂O and impurities including light impurities, heavy impurities, aqueous components or water, and organic compounds is compressed to a predetermined pressure; the heavy impurities, the aqueous components or water, and the organic compounds are then removed; thereafter, the gas flow is partially liquefied to form a gas mixture containing N₂O and non-condensable gases, and a liquid mixture; and the light impurities and the organic compounds are removed from the liquid mixture through evaporation. In the case where the N₂O concentration is 47 vol% as described in Example 1, the compressor and the refrigerator are operated under heavy loads to create 3 MPa and -49°C which are required to liquefy N₂O. The presence of much impurities that are compressed together with N₂O leads to a corresponding increase in the size of the compressor. The N₂O liquefaction start temperature is lowered with decreasing N₂O partial pressure, and thus the refrigerator needs an increased cooling capacity and a larger heat exchanger. That is, the liquefaction and purification by direct compression of a gas having a low N₂O concentration is very inefficient in terms of N₂O liquefaction and has room for improvement in facility cost and operation cost.

Despite these circumstances discussed above, there has been a demand for a method for highly purifying nitrous oxide that is useful as, for example, a gas for forming insulating oxide films in semiconductor manufacturing processes.

### SOLUTION TO PROBLEM

The present inventor carried out extensive studies and has invented a method capable of concentrating and purifying nitrous oxide from a mixed gas containing nitrous oxide in an efficient manner even in the case where the nitrous oxide concentration is low. The present invention has been completed based on the finding.

That is, the present invention pertains to the following [1] to [12].
[1] A nitrous oxide purification method including a step of performing gas separation by introducing a mixed gas containing nitrous oxide into a gas separation membrane including a polymer material to cause nitrous oxide to selectively permeate the gas separation membrane.
[2] The nitrous oxide purification method described in [1], wherein the polymer material is an aromatic polyimide.
[3] The nitrous oxide purification method described in [2], wherein the aromatic polyimide includes repeating units represented by the following formula (1): 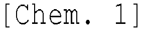 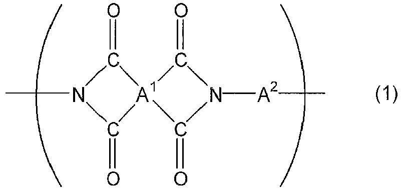 [in the formula (1), A¹ is a tetravalent group derived from an aromatic tetracarboxylic acid, and A² is a divalent group derived from an aromatic diamine].
[4] The nitrous oxide purification method described in [3], wherein in the repeating units represented by the formula (1), A¹ is at least one selected from a tetravalent group represented by the formula (2) below, a tetravalent group represented by the formula (3) below and a tetravalent group represented by the formula (4) below, and A² is at least one selected from divalent groups represented by the formula (5) below, divalent groups represented by the formula (6) below, divalent groups represented by the formula (7) below and divalent groups represented by the formula (8) below: 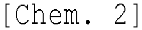 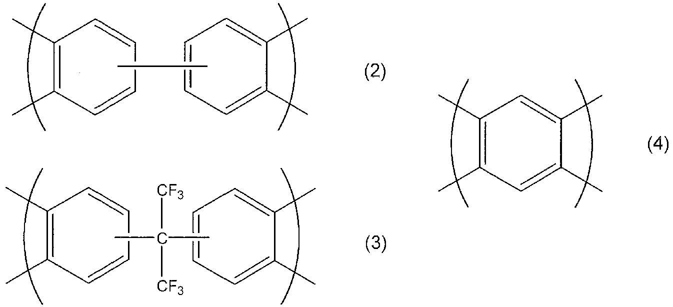 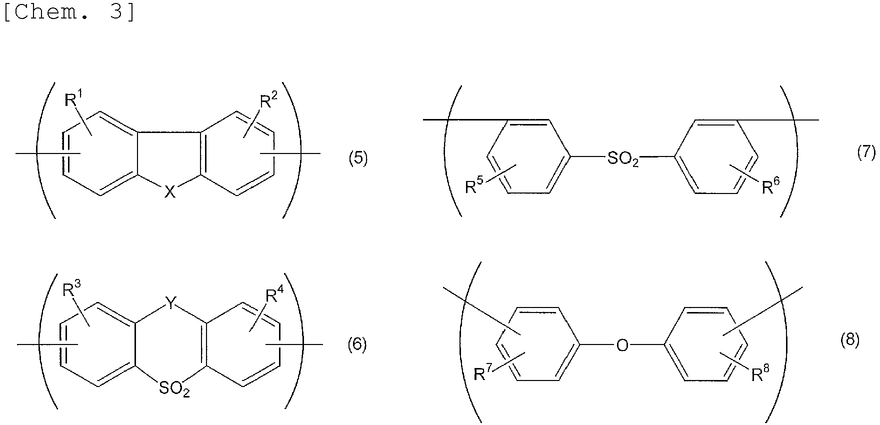 [in the formula (5), X is -S-, -SO- or -SO₂-, and R¹ and R² are each independently a hydrogen atom or an organic group; in the formula (6), Y is -CH₂- or -CO-, and R³ and R⁴ are each independently a hydrogen atom or an organic group; in the formula (7), R⁵ and R⁶ are each independently a hydrogen atom or an organic group; and in the formula (8), R⁷ and R⁸ are each independently a hydrogen atom or an organic group].
[5] The nitrous oxide purification method described in any one of [1] to [4], wherein the concentration of nitrous oxide in the mixed gas containing nitrous oxide is 5 to 90 vol%.
[6] The nitrous oxide purification method described in any one of [1] to [5], wherein the mixed gas containing nitrous oxide is introduced into the gas separation membrane at a pressure of less than 1.5 MPaG.
[7] The nitrous oxide purification method described in any one of [1] to [6], wherein the mixed gas containing nitrous oxide is introduced into the gas separation membrane at a temperature of less than 40°C.
[8] The nitrous oxide purification method described in any one of [1] to [7], wherein the mixed gas containing nitrous oxide further contains at least one additional gas component selected from nitrogen, oxygen, nitrogen monoxide, nitrogen dioxide, ammonia and water.
[9] The nitrous oxide purification method described in any one of [1] to [8], further including a step of performing another gas separation by introducing a permeate gas containing nitrous oxide that has been obtained by the previous gas separation into a gas separation membrane including a polymer material to cause nitrous oxide to selectively permeate the gas separation membrane.
[10] The nitrous oxide purification method described in any one of [1] to [9], further including, before introducing the mixed gas containing nitrous oxide into the gas separation membrane, a step of bringing the mixed gas containing nitrous oxide into contact beforehand with an aqueous solution including an alkaline compound and thereafter into contact with a molecular sieve.
[11] The nitrous oxide purification method described in any one of [1] to [10], further including a step of liquefying and distilling a permeate gas containing nitrous oxide that has been obtained by the gas separation.
[12] A process for manufacturing a container containing purified nitrous oxide, including sealing in a container nitrous oxide purified by the nitrous oxide purification method described in any one of [1] to [11].

### ADVANTAGEOUS EFFECTS OF INVENTION

The method provided by the present invention is an industrial, economically advantageous technique that can purify nitrous oxide from a mixed gas containing nitrous oxide by causing nitrous oxide to selectively permeate a gas separation membrane. Unlike the conventional costly approaches such as distillation from a dilute nitrous oxide concentration using a compressor, nitrous oxide can be highly concentrated by permeation through a gas separation membrane and thereby can be distilled and purified efficiently.

### BRIEF DESCRIPTION OF DRAWINGS

[Fig. 1] Fig. 1 illustrates an embodiment of a gas separation membrane module.
[Fig. 2] Fig. 2 illustrates a manner of flowing a mixed gas in Example.
[Fig. 3] Fig. 3 illustrates a manner of flowing a mixed gas in Example.
[Fig. 4] Fig. 4 illustrates a manner of flowing a mixed gas in Example.

### DESCRIPTION OF EMBODIMENTS

Preferred embodiments of the present invention will be described in detail hereinbelow.

A nitrous oxide purification method of the present invention includes a step of performing gas separation by introducing a mixed gas containing nitrous oxide into a gas separation membrane including a polymer material to cause nitrous oxide to selectively permeate the gas separation membrane. In the present invention, nitrous oxide is recovered from a mixed gas containing nitrous oxide at a high recovery rate.

### [Gas separation membranes]

The gas separation membrane is preferably composed of a plurality of hollow filament membranes. The hollow filaments are preferably 10 to 3000 µm in inner diameter and 30 to 7000 µm in outer diameter. The length of the hollow filaments may be selected in accordance with the amount of the mixed gas that is processed, and may be, for example, 100 to 3000 mm, or preferably 200 to 500 mm.

The polymer material forming the gas separation membrane is preferably an aromatic polyimide or a silicone resin, and is more preferably an aromatic polyimide. That is, the hollow filament membrane is preferably formed of an aromatic polyimide or a silicone resin, and is more preferably formed of an aromatic polyimide. Details of these materials will be described later.

The gas separation membrane is preferably an aggregate of hollow filaments aligned across the longitudinal direction. For example, the aggregate may be obtained by gathering about 100 to 1,000,000 hollow filaments having an appropriate length while aligning their longitudinal directions.

The aggregate can take various shapes. For example, the aggregate may be a bundle composed of a plurality of hollow filaments aligned substantially parallel to one another in the longitudinal direction, a sheet composed of a plurality of hollow filaments aligned substantially parallel to one another in the longitudinal direction, a stack of such sheets, or a cylinder or a column formed by coiling the sheet or the stack one time, or two or more times. Further, two or more of these aggregates may be used as a unit. Such a gas separation membrane offers a larger area of the hollow filament membrane through which the gas permeates, and allows the mixed gas to be supplied at a high pressure and to be separated efficiently into components. Thus, efficient gas separation can be realized.

In the present invention, use may be suitably made of a gas separation membrane module including a gas separation membrane (in the present specification, also written as the "permeation module") or, in particular, a hollow filament membrane module. The gas separation membrane module includes a container that has a mixed gas inlet, a permeate gas outlet and a non-permeate gas outlet, and a gas separation membrane installed in the container.

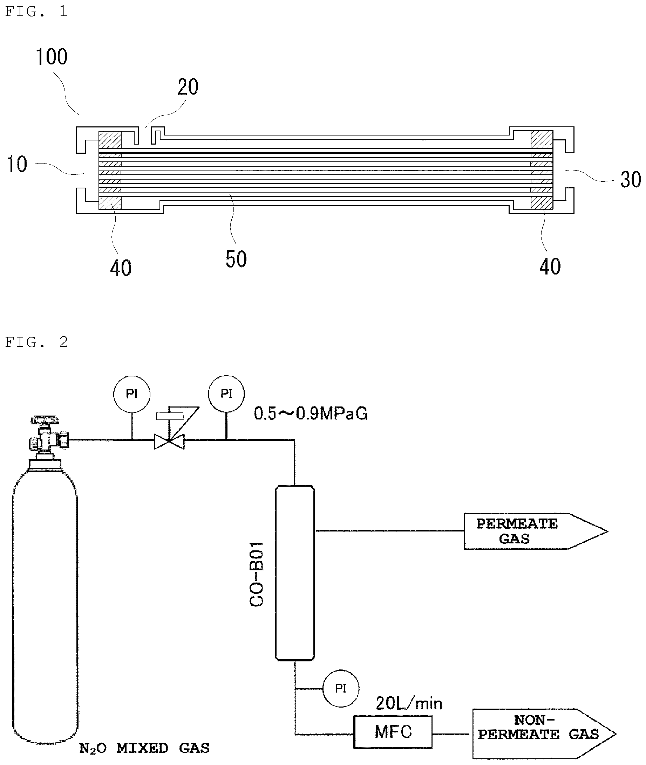

In an embodiment, for example, the gas separation membrane is placed and fixed in the container in a way that the inner space and the outer space of the hollow filaments constituting the gas separation membrane are separated from each other. The mixed gas inlet is connected to one end of the hollow filaments, and the non-permeate gas outlet is connected to the other end. For example, both ends of hollow filaments (an aggregate) are fastened with tube plates made of a thermosetting resin or the like while both of the ends of the hollow filaments are open, and the element consisting of the aggregate and the tube plates is placed and fixed in a container. One embodiment is illustrated in Fig. 1.

When a mixed gas is supplied through the mixed gas inlet to the inner space of the hollow filaments, nitrous oxide in the mixed gas permeates selectively the hollow filament membrane that is the gas separation membrane while the mixed gas flows through the inner space of the hollow filaments. The permeate gas that has permeated the hollow filament membrane and has a high concentration of nitrous oxide is discharged through the permeate gas outlet, and the non-permeate gas that did not pass through the hollow filament membrane is discharged through the non-permeate gas outlet. In this manner, nitrous oxide may be separated selectively.

In the present specification, the term "selectively" means that the concentration of nitrous oxide is higher after the permeation through the gas separation membrane than before the permeation, and does not mean that nitrous oxide permeates exclusively. Further, the gas that has permeated the gas separation membrane is also written as the "permeate gas", and the gas that did not pass through the membrane is also written as the "non-permeate gas".

The gas separation membrane module that is used is preferably a cartridge type.

### (Aromatic polyimides)

Hereinbelow, the aromatic polyimides suitable as materials for forming gas separation membranes, particularly hollow filament membranes, will be described. The aromatic polyimide preferably has repeating units represented by the following formula (1). 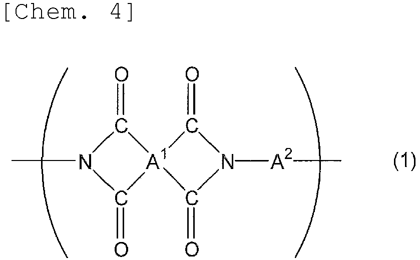 In the formula (1), A¹ is a tetravalent group derived from an aromatic tetracarboxylic acid, and A² is a divalent group derived from an aromatic diamine.

A¹ is preferably at least one selected from the tetravalent group represented by the formula (2), the tetravalent group represented by the formula (3), and the tetravalent group represented by the formula (4).

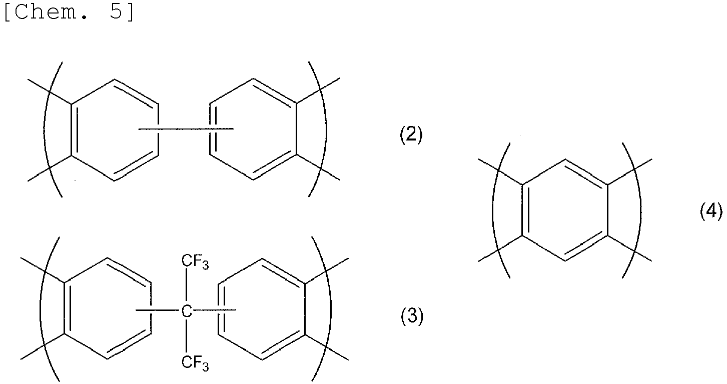

In 100 mol% of the repeating units represented by the formula (1), the proportion of the units in which the group A¹ is the biphenyl structure represented by the formula (2) is preferably 39 to 90 mol%, and more preferably 45 to 80 mol%; and the proportion of the units in which the group A¹ is the diphenylhexafluoropropane structure represented by the formula (3) is preferably 9 to 60 mol%, and more preferably 15 to 50 mol%. This configuration is preferable from the point of view of gas separation ability. Further, in 100 mol% of the repeating units represented by the formula (1), the proportion of the units in which A¹ is the group represented by the formula (4) is preferably 1 to 20 mol%, and more preferably 5 to 20 mol%.

A² is preferably at least one selected from divalent groups represented by the formula (5), divalent groups represented by the formula (6), divalent groups represented by the formula (7), and divalent groups represented by the formula (8).

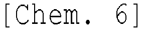

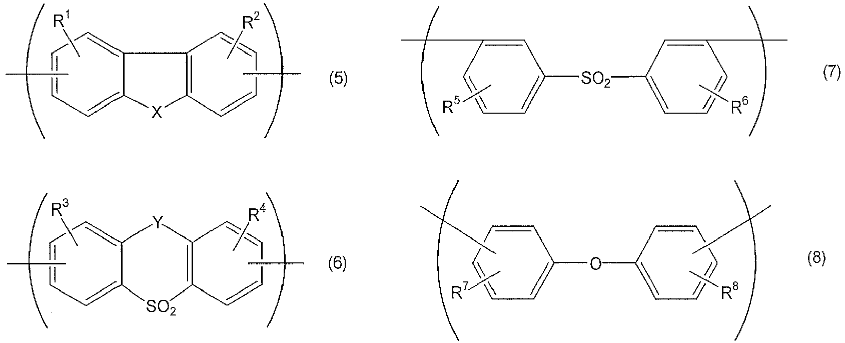

In the formula (5), X is -S-, -SO- or -SO₂-, and R¹ and R² are each independently a hydrogen atom or an organic group. In the formula (6), Y is -CH₂- or -CO-, and R³ and R⁴ are each independently a hydrogen atom or an organic group. In the formula (7), R⁵ and R⁶ are each independently a hydrogen atom or an organic group. In the formula (8), R⁷ and R⁸ are each independently a hydrogen atom or an organic group.

Examples of the organic groups include alkyl groups having 1 to 5 carbon atoms such as methyl group, ethyl group and propyl group; and alkoxy groups having 1 to 5 carbon atoms such as methoxy group.

In 100 mol% of the repeating units represented by the formula (1), the total proportion of the units in which A² is a group represented by the formula (5) and the units in which A² is a group represented by the formula (6) is preferably 30 to 90 mol%, and more preferably 50 to 80 mol%; the proportion of the units in which A² is a group represented by the formula (7) is preferably 5 to 50 mol%, and more preferably 10 to 40 mol%; and the proportion of the units in which A² is a group represented by the formula (8) is preferably 5 to 20 mol%, and more preferably 10 to 15 mol%.

Examples of the aromatic diamines from which the formulae (5) to (8) are derived include diaminodibenzothiophenes such as 3,7-diamino-dialkyldibenzothiophenes, 2,8-diamino-dialkyldibenzothiophenes and 3,7-diamino-dialkoxydibenzothiophenes; diaminodibenzothiophene=5,5-dioxides such as 3,7-diamino-dialkyldibenzothiophene=5,5-dioxides, 2,8-diamino-dialkyldibenzothiophene=5,5-dioxides and 3,7-diamino-dialkoxydibenzothiophene=5,5-dioxides; diaminothioxanthene-10,10-diones such as 3,6-diaminothioxanthene-10,10-diones, 2,7-diaminothioxanthene-10,10-diones, 3,6-diamino-dialkylthioxanthene-10,10-diones and 3,6-diamino-dialkoxythioxanthene-10,10-diones; diaminothioxanthene-9,10,10-triones such as 3,6-diamino-thioxanthene-9,10,10-triones and 2,7-diamino-thioxanthene-9,10,10-triones; 3,3'-diaminodiphenylsulfones such as 3,3'-diaminodiphenylsulfones and 3,3'-diamino-4,4'-dialkyl-diphenylsulfones; and diaminodiphenyl ethers such as 4,4'-diaminodiphenyl ethers and 3,4'-diaminodiphenyl ethers. Examples of the alkyls in the above specific examples include methyl, ethyl and propyl. Examples of the alkoxies in the above specific examples include methoxy.

In the present invention, the gas separation membrane is preferably composed of an asymmetric hollow filament membrane formed of an aromatic polyimide. The asymmetric hollow filament membrane formed of an aromatic polyimide preferably has an asymmetric structure composed of an extremely thin, for example, 0.001 to 5 µm thick, dense layer that is mainly responsible for gas separation, and a relatively thick, for example, 10 to 2000 µm thick, porous layer that supports the dense layer. Such an asymmetric hollow filament membrane formed of an aromatic polyimide may be produced by, for example, the method described in JP-A-2017-29871.

The aromatic polyimide is preferably soluble. The term "soluble" means having excellent solubility in an organic polar solvent. Examples of the organic polar solvents for forming the aromatic polyimide solutions include phenols, catechols, halogenated phenols and amides. The organic polar solvents may be used singly, or two or more may be used in combination.

In the aromatic polyimide solution that is spun, the concentration of the aromatic polyimide is preferably 5 to 40 mass%, and more preferably 8 to 25 mass%. The solution viscosity at 100°C is preferably 100 to 15000 poise, more preferably 200 to 10000 poise, and still more preferably 300 to 5000 poise. These configurations are preferred from the point of view of obtaining asymmetric hollow filaments. The solution viscosity is measured at a temperature of 100°C using a rotational viscometer (rotor shear rate: 1.75 sec⁻¹) .

The asymmetric hollow filaments may be suitably obtained by spinning of the aromatic polyimide solution according to a dry-wet technique (by a dry-wet spinning method). The dry-wet technique is a technique (a phase inversion technique) where the polymer solution is formed into a film, the solvent on the surface is evaporated to form a thin dense layer, and further the polymer is submerged into a coagulant liquid to produce micropores utilizing the phase separation phenomenon that occurs during the immersion, thereby forming a porous layer. The dry-wet spinning method is a method of forming a hollow filament membrane by a dry-wet technique using a spinning nozzle.

The coagulant liquid is preferably a solvent that does not substantially dissolve the aromatic polyimide and is compatible with the solvent of the aromatic polyimide solution. Examples thereof include water; lower alcohols such as methanol, ethanol and propyl alcohol; and ketones having a lower alkyl group such as acetone, diethyl ketone and methyl ethyl ketone. The coagulant liquids may be used singly, or two or more may be used in combination.

The affinity of nitrous oxide for the polyimide membrane is higher than that of nitrogen (N₂) or oxygen (O₂). Under the application of pressure, gas components permeate at different speeds, and the permeate gas has a gas composition rich in nitrous oxide while the non-permeate gas has a gas composition rich in nitrogen and oxygen.

Specific examples of the gas separation membrane modules that have hollow filaments formed of the above aromatic polyimide include CO₂ separation modules CO-B01 and CO-C07FH (trade names) manufactured by UBE INDUSTRIES, LTD.

### (Silicone resins)

Hereinbelow, silicone resins suitable as materials for forming gas separation membranes, particularly hollow filament membranes, will be described. Hollow filament membranes formed of silicone resins have similar characteristics as hollow filament membranes formed of the aromatic polyimides.

The silicone resin principally includes a polydimethylsiloxane component. Where necessary, part of the methyl groups may be replaced by other organic groups such as, for example, propyl groups and butyl groups, or may be replaced by inorganic groups to control the gas permeability of the resin.

In many cases, hollow filament membranes formed of a silicone resin generally have lower pressure resistance than hollow filament membranes made of an aromatic polyimide, but are still useful at tolerable pressures. Specific examples of such hollow filament membranes which may be used include silicone resin membrane (M40-6000) manufactured by NAGAYANAGI CO., LTD.

### [Mixed gas and conditions for introduction thereof]

The concentration of nitrous oxide in the mixed gas containing nitrous oxide is preferably 5 to 90 vol%, and more preferably 10 to 80 vol%. To benefit from both the number of separation membrane modules and purification efficiency, the concentration is more preferably not less than 30 vol%. According to the present invention, further, nitrous oxide can be efficiently purified even when the nitrous oxide concentration is as low as 60 vol% or less or as low as 50 vol% or less. The mixed gas that is introduced into the gas separation membrane for the first time is also written as the "feedstock gas", and the concentration of nitrous oxide in the mixed gas usually refers to the concentration of nitrous oxide in the feedstock gas.

The mixed gas before introduction into the gas separation membrane contains nitrous oxide and additional gas component(s). The additional gas component is, for example, at least one selected from nitrogen (N₂), oxygen (O₂), nitrogen monoxide, nitrogen dioxide, ammonia and water. According to the present invention, nitrous oxide can be efficiently separated from the mixed gas.

The higher the concentration of nitrous oxide after permeation through the gas separation membrane, the more the unit consumption of distillation is improved for the removal of low-boiling impurities such as oxygen (O₂), nitrogen (N₂) and nitrogen monoxide. Thus, the gas separation may be performed in multiple stages. That is, the permeate gas containing nitrous oxide that has been obtained by the gas separation may be further introduced into a gas separation membrane to cause nitrous oxide to selectively permeate the gas separation membrane. The number of the gas separation membrane modules that are used is not particularly limited and may be selected appropriately in accordance with the amount of gas to be treated. The number of the gas separation membrane modules is usually 1 to 50, and preferably 5 to 30. When the amount of gas is small, the treatment may be performed using one to five gas separation membrane modules.

The concentration of nitrous oxide after permeation may be increased by, for example, connecting a plurality of gas separation membrane modules in series and introducing the permeate gas from, for example, the first-stage gas separation membrane module into the mixed gas inlet of the second-stage gas separation membrane module. Alternatively, a plurality of gas separation membrane modules may be connected in parallel, and an additional gas separation membrane module(s) may be directly connected thereto. For example, the permeate gas from a plurality of parallel-connected gas separation membrane modules as the first stage may be introduced into the mixed gas inlet of the second-stage gas separation membrane module connected in series to the first stage. Further, in order to recover nitrous oxide at an enhanced rate, the non-permeate gas may be recycled and supplied again to the mixed gas inlet of the gas separation membrane module. In other cases, a plurality of gas separation membrane modules may be connected in parallel.

The mixed gas is preferably introduced into the gas separation membrane at an increased pressure. The mixed gas containing nitrous oxide is preferably introduced into the gas separation membrane at a pressure of less than 1.5 MPaG, more preferably 0.2 to 1.4 MPaG, and still more preferably 0.7 to 1.3 MPaG. An increased pressure allows more nitrous oxide to permeate and is thus advantageous in terms of the yield of nitrous oxide.

The mixed gas containing nitrous oxide is preferably introduced into the gas separation membrane at a temperature of less than 40°C, more preferably 0 to 30°C, and most preferably 20 to 25°C. If the temperature is 40°C or above, the selectivity of nitrous oxide in permeation may be decreased.

When the gas separation is performed in multiple stages, it is preferable that the mixed gas (for example, the feedstock gas or the permeate gas) be introduced into each of the gas separation membranes at a pressure and a temperature that are within the ranges described above.

Before the introduction into the gas separation membrane, the mixed gas may be preliminarily brought into contact with an aqueous solution containing an alkaline compound such as sodium hydroxide or potassium hydroxide and thereafter into contact with a molecular sieve such as molecular sieve 3A. This contact step removes carbon dioxide, nitrogen dioxide, ammonia and water. Thus, when the contact step is scheduled, the mixed gas may further contain carbon dioxide. Among the alkaline compounds, sodium hydroxide is preferable. The concentration of the alkaline compound in the aqueous alkaline compound solution is preferably 5 to 40 mass%, and more preferably 10 to 20 mass%.

The permeate gas containing nitrous oxide that has been obtained by the gas separation described above may be liquefied and distilled. This distillation step further removes nitrogen, oxygen and nitrogen monoxide. In the present invention, the concentration of nitrous oxide in the permeate gas that will be subjected to the distillation step may be preferably as high as 70 vol% or above, and more preferably as high as 80 vol% or above, and therefore efficient purification by distillation is realized. For example, by virtue of nitrous oxide being highly concentrated before distillation, the liquefaction pressure during distillation may be reduced and the compressor may be miniaturized.

In addition to nitrogen, oxygen, carbon dioxide, nitrogen monoxide, nitrogen dioxide, ammonia and water, the mixed gas may contain any other components without limitation. Examples of such additional components include methane, hydrogen and helium. These impurities may be removed by the distillation step.

The distillation step may be performed using a common distillation method. In view of the fact that the distribution ratio of nitrous oxide to low-boiling components in the gas-liquid equilibrium is increased as the temperature is lower, it is usually more preferable to adopt, for example, a cryogenic separation method at a pressure of 0.1 to 0.2 MPaG and -50 to -100°C, specifically, about -80°C.

According to the present invention, it is possible to obtain nitrous oxide gas having a high purity, for example, a purity of 99.9 vol% or above, preferably 99.999 vol% or above. Such high-purity nitrous oxide gas is useful in semiconductor applications such as a gas for forming insulating oxide films in semiconductor manufacturing processes.

Further, a container containing purified nitrous oxide may be produced by sealing in a container nitrous oxide purified by the nitrous oxide purification method of the present invention described hereinabove. The container is not particularly limited and may be, for example, a conventional cylinder or tank.

### EXAMPLES

The present invention will be described in detail based on Examples hereinbelow. However, it should be construed that the scope of the present invention is not limited exclusively to such Examples. In Examples below, the temperature at which the mixed gas was introduced into the gas separation membrane was set to 25°C.

### [Example 1]

In a cylinder, a mixed gas (a feedstock gas, nitrous oxide concentration: 34.9 vol%) was prepared which contained nitrous oxide, 7 vol% oxygen and 58.1 vol% nitrogen. Permeation was tested by flowing the mixed gas as illustrated in Fig. 2 at 0.5 MPaG, 0.7 MPaG and 0.9 MPaG. CO₂ separation module CO-B01 manufactured by UBE INDUSTRIES, LTD. was used as the permeation module with a gas separation membrane. The aromatic polyimide used in the module CO-B01 had at least the structures represented by the formulae (3) and (4). Using the mass flow controller (MFC), the gas flow rate of the non-permeate gas was controlled to about 20 L/min. The gas flow rates of the permeate gas and the non-permeate gas were measured with flow meters, and the gas compositions were analyzed using a gas chromatograph, the results being described in Table 1.

### [Table 1]

**Table 1 Example 1**

| Pressure MPaG | Flow rate of feedstock gas L/min | | Flow rate L/min | Gas composition vol% | | | N₂O recovery rate % |
|---|---|---|---|---|---|---|---|
| | | | | O₂ | N₂ | N₂O | |
| - | - | Feedstock gas | - | 7 | 58.1 | 34.9 | - |
| 0.5 | 31.2 | Permeate gas | 9.8 | 6.7 | 13.2 | 80.1 | 74.0 |
| | | Non-permeate gas | 21.4 | 7.4 | 79.7 | 12.9 | |
| 0. 7 | 35.1 | Permeate gas | 13.2 | 7.0 | 14.3 | 78.7 | 87.0 |
| | | Non-permeate gas | 21.9 | 7.2 | 85.7 | 7.1 | |
| 0. 9 | 36.3 | Permeate gas | 14.5 | 7.4 | 15.7 | 76.9 | 93.3 |
| | | Non-permeate gas | 21.8 | 6. 9 | 89.4 | 3.7 | |

| | | | | | | | |
|---|---|---|---|---|---|---|---|
| N₂O recovery rate (%) = 100 × (flow rate of permeate gas × N₂O concentration in permeate gas)/{(flow rate of permeate gas × N₂O concentration in permeate gas) + (flow rate of non-permeate gas × N₂O concentration in non-permeate gas)} | | | | | | | |

### [Example 2]

In a cylinder, a mixed gas (a feedstock gas, nitrous oxide concentration: 56.9 vol%) was prepared which contained nitrous oxide, 26.5 vol% oxygen and 16.6 vol% nitrogen. Permeation was tested by flowing the mixed gas as illustrated in Fig. 2 at 0.5 MPaG, 0.7 MPaG and 0.9 MPaG. CO₂ separation module CO-B01 manufactured by UBE INDUSTRIES, LTD. was used as the permeation module with a gas separation membrane. Using the mass flow controller, the gas flow rate of the non-permeate gas was controlled to about 20 L/min. The gas flow rates of the permeate gas and the non-permeate gas were measured with flow meters, and the gas compositions were analyzed using a gas chromatograph, the results being described in Table 2.

### [Table 2]

**Table 2 Example 2**

| Pressure MPaG | Flow rate of feedstock gas L/min | | Flow rate L/min | Gas composition vol% | | | N₂O recovery rate % |
|---|---|---|---|---|---|---|---|
| | | | | O₂ | N₂ | N₂O | |
| - | - | Feedstock gas | - | 26.5 | 16.6 | 56.9 | - |
| 0.5 | 42.6 | Permeate gas | 23.3 | 13.7 | 1.7 | 84.6 | 78.8 |
| | | Non-permeate gas | 19.3 | 40.1 | 32.4 | 27.5 | |
| 0.7 | 51.3 | Permeate gas | 31.0 | 14.1 | 1.8 | 84.1 | 86.3 |
| | | Non-permeate gas | 20.3 | 42.2 | 37.4 | 20.4 | |
| 0. 9 | 57.9 | Permeate gas | 37.2 | 15.7 | 2. 1 | 82.2 | 90.4 |
| | | Non-permeate gas | 20.7 | 43.7 | 40.6 | 15.7 | |

| | | | | | | | |
|---|---|---|---|---|---|---|---|
| N₂O recovery rate (%) = 100 × (flow rate of permeate gas × N₂O concentration in permeate gas)/{(flow rate of permeate gas × N₂O concentration in permeate gas) + (flow rate of non-permeate gas × N₂O concentration in non-permeate gas)} | | | | | | | |

### [Example 3]

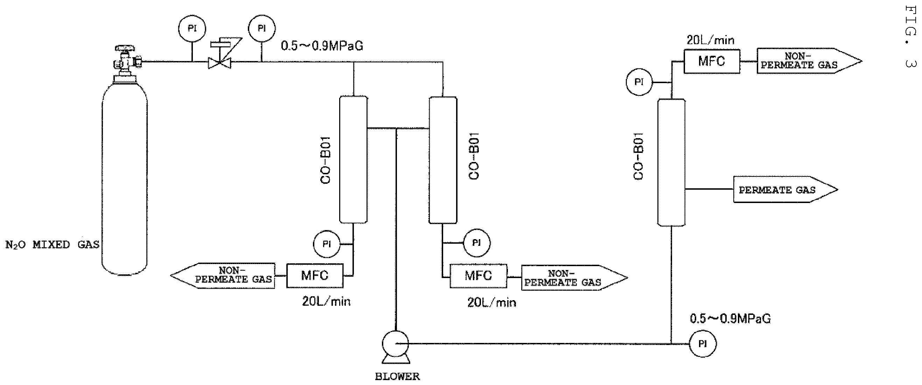

In a cylinder, a mixed gas (a feedstock gas, nitrous oxide concentration: 34.9 vol%) was prepared which contained nitrous oxide, 7 vol% oxygen and 58.1 vol% nitrogen. Permeation was tested by flowing the mixed gas as illustrated in Fig. 3 at 0.5 MPaG, 0.7 MPaG and 0.9 MPaG. Two CO₂ separation modules CO-B01 manufactured by UBE INDUSTRIES, LTD. were connected in parallel to construct the first-stage permeation module with a gas separation membrane, and the same separation module was connected as the second-stage permeation module in series to the first stage. Using the mass flow controllers, the gas flow rate of the non-permeate gas was controlled to about 20 L/min. The gas flow rates of the permeate gas and the non-permeate gas in the second stage were measured with flow meters, and the gas compositions were analyzed using a gas chromatograph, the results being described in Table 3.

### [Table 3]

**Table 3 Example 3**

| Pressure MPaG | Flow rate of feedstock gas L/min | | Flow rate in second stage L/min | Gas composition in second stage vol% | | | N₂O recovery rate % |
|---|---|---|---|---|---|---|---|
| | | | | O₂ | N₂ | N₂O | |
| - | - | Feedstock gas | - | 7 | 58.1 | 34.9 | - |
| 0.5 | 193.8 | Permeate gas | 40.9 | 2.4 | 0.7 | 96.9 | 58.6 |
| | | Non-permeate gas | 19.0 | 16.2 | 28.7 | 55.1 | |
| 0.7 | 196.4 | Permeate gas | 52.4 | 2.7 | 0. 8 | 96.4 | 73.7 |
| | | Non-permeate gas | 19.4 | 18.5 | 34.4 | 47.1 | |
| 0. 9 | 217.0 | Permeate gas | 65.1 | 2. 9 | 0.9 | 96.2 | 82.7 |
| | | Non-permeate gas | 20.1 | 20.1 | 40.0 | 39.9 | |

| | | | | | | | |
|---|---|---|---|---|---|---|---|
| N₂O recovery rate (%) = 100 × (flow rate of permeate gas in second stage × N₂O concentration in permeate gas in second stage)/(flow rate of feedstock gas × N₂O concentration in feedstock gas) | | | | | | | |

### [Example 4]

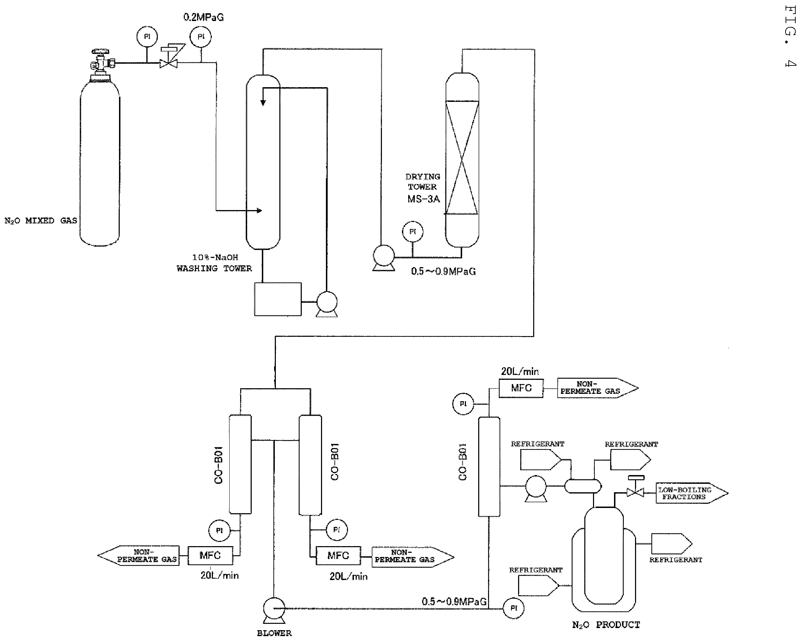

In a cylinder, a mixed gas was prepared which contained nitrous oxide, N₂ = 55 vol%, O₂ = 4 vol%, NO₂ = 0.5 vol%, NO = 0.5 vol%, CO₂ = 2 vol%, NH₃ = 0.1 vol% and water = 5.9 vol% (nitrous oxide concentration: 32 vol%). The mixed gas was flowed as illustrated in Fig. 4 through an alkaline washing tower (a 10 mass% aqueous NaOH solution) and a dehydrating tower (a drying tower packed with molecular sieve 3A (MS-3A)) and was thereafter passed through permeation modules at 0.5 MPaG, 0.7 MPaG or 0.9 MPaG. Two CO₂ separation modules CO-B01 manufactured by UBE INDUSTRIES, LTD. were connected in parallel to construct the first-stage permeation module, and the same separation module was connected as the second-stage permeation module in series to the first stage. Using the mass flow controllers, the gas flow rate of the non-permeate gas was controlled to about 20 L/min. The permeate gas in the second stage was liquefied by being cooled with a refrigerant at -78°C, and the liquefied gas was stored in a product tank. Cryogenic distillation was performed by blowing a portion in a gaseous state corresponding to 10% of the whole nitrous oxide stored in the product tank while maintaining the product tank at - 78°C.

The impurity components in the nitrous oxide obtained were analyzed with a gas chromatograph and a Fourier transform infrared spectrometer, the results being described in Table 4. The nitrous oxide obtained had a purity of at least 99.999 vol%.

[Table 4]

**Table 4 Example 4 Results of analysis of impurities in nitrous oxide product (unit: vol ppm)**

| Pressure MPaG | O₂ | N₂ | NO₂ | NO | CO₂ | NH₃ | Water |
|---|---|---|---|---|---|---|---|
| 0.5 | < 0.1 | < 0.1 | < 0.1 | < 0.1 | < 0.1 | < 0.1 | < 0.1 |
| 0.7 | < 0.1 | < 0.1 | < 0.1 | < 0.1 | < 0.1 | < 0.1 | < 0.1 |
| 0.9 | < 0.1 | < 0.1 | < 0.1 | < 0.1 | < 0.1 | < 0.1 | < 0.1 |

### [Example 5]

In a cylinder, a mixed gas (a feedstock gas, nitrous oxide concentration: 56.9 vol%) was prepared which contained nitrous oxide, 26.5 vol% oxygen and 16.6 vol% nitrogen. Permeation was tested by flowing the mixed gas as illustrated in Fig. 2 at 0.2 MPaG. Silicone resin membrane (M40-6000) manufactured by NAGAYANAGI CO., LTD. was used as the permeation module. Using the mass flow controller, the gas flow rate of the non-permeate gas was controlled to about 10 L/min. The gas flow rates of the permeate gas and the non-permeate gas were measured with flow meters, and the gas compositions were analyzed using a gas chromatograph, the results being described in Table 5.

The N₂O concentration in the permeate gas was sufficiently high, although the N₂O recovery rate was lower than those obtained in Examples 1 to 3 using CO₂ separation modules CO-B01 manufactured by UBE INDUSTRIES, LTD.

### [Table 5]

**Table 5 Example 5**

| Pressure MPaG | Flow rate of feedstock gas L/min | Location | Flow rate L/min | Gas composition vol% | | | N₂O recovery rate % |
|---|---|---|---|---|---|---|---|
| | | | | O₂ | N₂ | N₂O | |
| - | - | Feedstock gas | - | 26.5 | 16.6 | 56.9 | - |
| 0.2 | 10.6 | Permeate gas | 1.2 | 10.5 | 3.5 | 86.0 | 17.3 |
| | | Non-permeate gas | 9.4 | 28.9 | 18.8 | 52.3 | |

| | | | | | | | |
|---|---|---|---|---|---|---|---|
| N₂O recovery rate (%) = 100 × (flow rate of permeate gas × N₂O concentration in permeate gas)/{(flow rate of permeate gas × N₂O concentration in permeate gas) + (flow rate of non-permeate gas × N₂O concentration in non-permeate gas)} | | | | | | | |

### REFERENCE SINGS LIST

10 ... MIXED GAS INLET, 20 ... PERMEATE GAS OUTLET, 30 ... NON-PERMEATE GAS OUTLET, 40 ... TUBE PLATE, 50 . .. HOLLOW FILAMENTS (AGGREGATE, GAS SEPARATION MEMBRANE), 100 . . . GAS SEPARATION MEMBRANE MODULE

## Claims

1. A nitrous oxide purification method comprising a step of performing gas separation by introducing a mixed gas containing nitrous oxide into a gas separation membrane comprising a polymer material to cause nitrous oxide to selectively permeate the gas separation membrane.

2. The nitrous oxide purification method according to Claim 1, wherein the polymer material is an aromatic polyimide.

3. The nitrous oxide purification method according to Claim 2, wherein the aromatic polyimide comprises repeating units represented by the following formula (1): 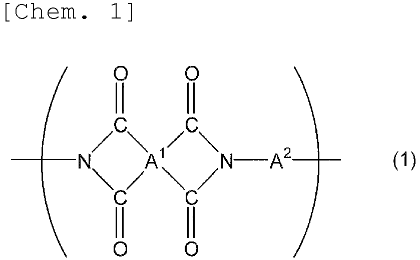 [in the formula (1), A¹ is a tetravalent group derived from an aromatic tetracarboxylic acid, and A² is a divalent group derived from an aromatic diamine].

4. The nitrous oxide purification method according to Claim 3, wherein in the repeating units represented by the formula (1), A¹ is at least one selected from a tetravalent group represented by the formula (2) below, a tetravalent group represented by the formula (3) below and a tetravalent group represented by the formula (4) below, and A² is at least one selected from divalent groups represented by the formula (5) below, divalent groups represented by the formula (6) below, divalent groups represented by the formula (7) below and divalent groups represented by the formula (8) below: 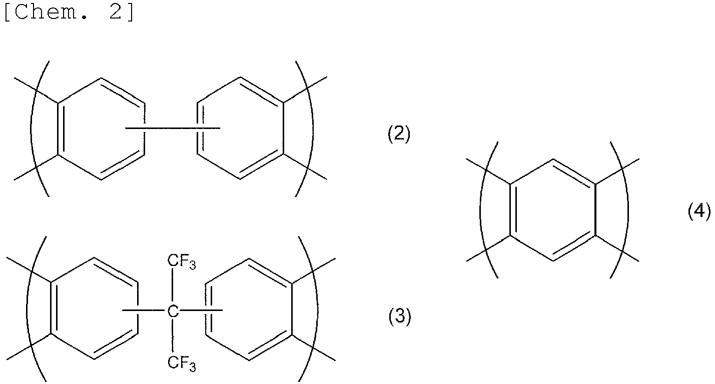 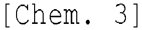 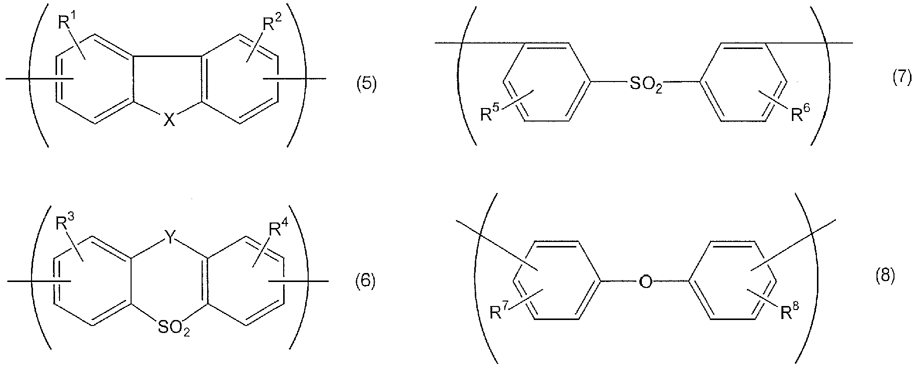 [in the formula (5), X is -S-, -SO- or -SO₂-, and R¹ and R² are each independently a hydrogen atom or an organic group; in the formula (6), Y is -CH₂- or -CO-, and R³ and R⁴ are each independently a hydrogen atom or an organic group; in the formula (7), R⁵ and R⁶ are each independently a hydrogen atom or an organic group; and in the formula (8), R⁷ and R⁸ are each independently a hydrogen atom or an organic group].

5. The nitrous oxide purification method according to any one of Claims 1 to 4, wherein the concentration of nitrous oxide in the mixed gas containing nitrous oxide is 5 to 90 vol%.

6. The nitrous oxide purification method according to any one of Claims 1 to 5, wherein the mixed gas containing nitrous oxide is introduced into the gas separation membrane at a pressure of less than 1.5 MPaG.

7. The nitrous oxide purification method according to any one of Claims 1 to 6, wherein the mixed gas containing nitrous oxide is introduced into the gas separation membrane at a temperature of less than 40°C.

8. The nitrous oxide purification method according to any one of Claims 1 to 7, wherein the mixed gas containing nitrous oxide further contains at least one additional gas component selected from nitrogen, oxygen, nitrogen monoxide, nitrogen dioxide, ammonia and water.

9. The nitrous oxide purification method according to any one of Claims 1 to 8, further comprising a step of performing another gas separation by introducing a permeate gas containing nitrous oxide that has been obtained by the previous gas separation into a gas separation membrane comprising a polymer material to cause nitrous oxide to selectively permeate the gas separation membrane.

10. The nitrous oxide purification method according to any one of Claims 1 to 9, further comprising, before introducing the mixed gas containing nitrous oxide into the gas separation membrane, a step of bringing the mixed gas containing nitrous oxide into contact beforehand with an aqueous solution including an alkaline compound and thereafter into contact with a molecular sieve.

11. The nitrous oxide purification method according to any one of Claims 1 to 10, further comprising a step of liquefying and distilling a permeate gas containing nitrous oxide that has been obtained by the gas separation.

12. A process for manufacturing a container containing purified nitrous oxide, comprising sealing in a container nitrous oxide purified by the nitrous oxide purification method described in any one of Claims 1 to 11.
